# EUROPÄISCHE PATENTANMELDUNG

(11) **EP 2 123 864 A1**
(43) Veröffentlichungstag der Anmeldung: **25.11.2009**
(21) Anmeldenummer: 08156790.1
(22) Anmeldetag: 23.05.2008
(51) Int. Cl.: F01D 25/00, F02C 7/30, F02C 7/143, F02C 7/045, F02B 37/00, F02B 77/04

(54) **Verdichterreinigung**

(71) Anmelder: ABB Turbo Systems AG, 5400 Baden (CH)
(72) Erfinder: Neuenschwander, Peter, 8006 Zürich (CH); Di Pietro, Marco, 4665 Oftringen (CH)
(74) Vertreter: ABB Patent Attorneys

(57) **Zusammenfassung**

Die vereinfachte Reinigungsvorrichtung für einen Verdichter umfasst einen Behälter (51) für ein Reinigungsmedium, welcher im Gehäuse (41) eines Schalldämpfers (4), integriert ist und aus dem das Reinigungsmedium über eine Zuführung (52) dem Strömungskanal zugeführt werden kann.

## Beschreibung

### Technisches Gebiet

Die Erfindung bezieht sich auf das Gebiet der Reinigung von Verdichtern, insbesondere Verdichter von Abgasturboladern für Brennkraftmaschinen. Sie betrifft ein Lufteintrittsgehäuse eines Verdichters mit einer integrierten Reinigungsvorrichtung.

### Stand der Technik

Abgasturbolader werden zur Leistungssteigerung von Brennkraftmaschinen (Hubkolbenmotoren) eingesetzt. Ein Abgasturbolader besteht aus einer Abgasturbine im Abgasstrom der Brennkraftmaschine und einem Verdichter im Ansaugtrakt der Brennkraftmaschine. Das Turbinenrad der Abgasturbine wird vom Abgasstrom der Brennkraftmaschine in Rotation versetzt und treibt über eine Welle das Laufrad des Verdichters an. Der Verdichter erhöht den Druck im Ansaugtrakt der Brennkraftmaschine, so dass beim Ansaugen eine größere Menge Luft in die Brennkammern gelangt.
Es ist bekannt, dass bei Verdichtern von solchen Abgasturboladern das Ansaugen von verschmutzter Luft zu Verunreinigungen führen kann, insbesondere auf den Laufschaufeln und der Nabe des schnell rotierenden Verdichterrads. Die Verunreinigungen verursachen raue Oberflächen, welche innerhalb kurzer Zeit die Leistung des Verdichters massgeblich beeinträchtigen können.
Um die eingangs genannten Effekte zu vermeiden, werden Verdichter regelmässig gereinigt. Die Reinigung wird je nach Auslegung des Verdichters unter Voll- oder Teillast durchgeführt. Das Verdichterrad wird entsprechend bei voller oder reduzierter Umdrehungsgeschwindigkeit rotiert und ein Reinigungsmedium vor dem Verdichterrad der Strömung zugeführt.

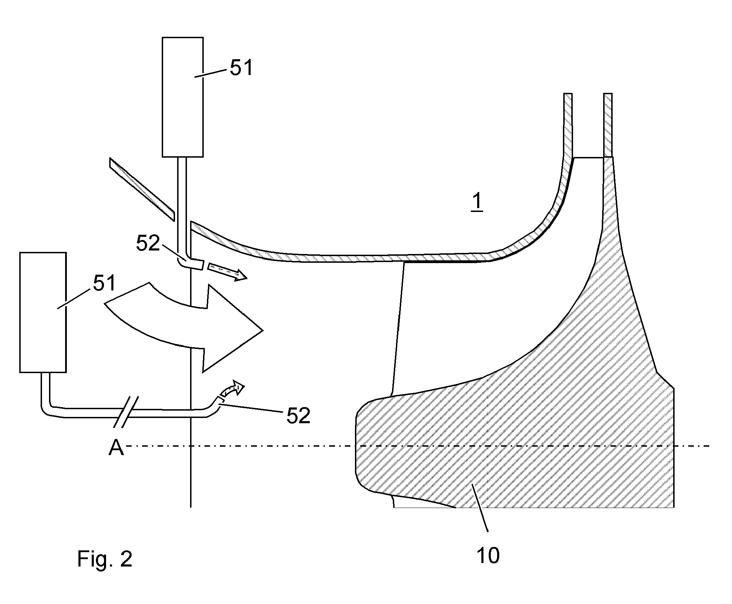

Fig. 2 zeigt die beiden am häufigsten verwendeten Reinigungsvorrichtungen. Zum Einführen des Reinigungsmediums - Wasser/ Reinigungslösung/ Reinigungsmittel/Partikel/ Granulat - in den Strömungskanal sind von radial ausserhalb des Verdichtergehäuses oder aber im Bereich eines Gehäusemittelstücks im radial inneren Bereich des Strömungskanals einfache Schläuche oder dünne Rohre in den Strömungsbereicht geführt. Durch diese Schläuche oder Rohre kann zum Reinigen des Verdichterrades zum geeigneten Zeitpunkt die benötigte Menge des Reinigungsmediums dem Strömungskanal zugeführt werden. Das Reinigungsmedium wird von der Strömung erfasst und in den Bereich der Laufschaufeln des rotierenden Verdichterrades befördert, wo es seine reinigende Wirkung entfalten kann.
Bei herkömmlichen Verdichtern wird für die Verdichterreinigung ein Behälter für das Reinigungsmedium ausserhalb des Luftansauggehäuses - Schalldämpfer oder Luftansaugstutzen - befestigt. Dieser Behälter ist in der Regel mit einem Deckel versehen und über ein Ventil mit dem Strömungskanal verbunden. Soll der Verdichter gereinigt werden, wird bei geschlossenem Ventil das Reinigungsmedium in den Behälter eingefüllt. Danach wird der Behälter mit dem Deckel verschlossen und das Auslassventil geöffnet. Das Reinigungsmedium strömt danach durch eine Zuleitung und ein Röhrchen bis in den Strömungskanal vor dem Verdichterrad.
Es sind auch Lösungen bekannt, bei denen der Behälter unter Druck gesetzt wird, um das Reinigungsmedium einzudüsen. Der Behälter kann demontierbar am Gehäuse befestigt sein, so dass der Behälter zwischen zwei Reinigungsvorgängen vom Gehäuse entfernt werden kann, etwa um zu verhindern dass der ausserhalb des Gehäuses angebrachte Behälter beschädigt wird oder einfach nur zu viel Platz beansprucht.

### Kurze Darstellung der Erfindung

Die Aufgabe der vorliegenden Erfindung besteht darin, eine Reinigungsvorrichtung für einen Verdichter eines Abgasturboladers zu vereinfachen.
Erfindungsgemäss wird dies erreicht, indem der Behälter für das Reinigungsmedium in ein lufteintrittseitiges Gehäuseteil, also etwa dem Schalldämpfer, dem Luftansaugstutzen oder dem Verdichtergehäuse selber, integriert wird.
Dank der integrierten Lösung sind weniger Bauteile nötig, wodurch sich der logistische Aufwand bei der Montage verkleinert. Zudem können die Aussenabmessungen des Verdichters, bzw. des gesamten Abgasturboladers reduziert werden, was für den Transport, den Anbau des Turboladers am Motor und den Service günstig ist. Im Servicefall und beim Transport ist keine exponierte Reinigungsvorrichtung vorhanden, welche beschädigt werden kann. Die Einrichtung ist zuverlässiger, da keine beweglichen Teile nötig sind.
Die neue Lösung kann sowohl bei Ansaugung mit Saugstutzen wie auch mit Schalldämpfer realisiert werden.
Weitere Vorteile ergeben sich aus den abhängigen Patentansprüchen.

### Kurze Beschreibung der Zeichnungen

Der erfindungsgemässe Verdichter mit einer Reinigungsvorrichtung wird anschliessend anhand von Zeichnungen näher erläutert. Hierbei zeigt
- Fig. 1: eine Gesamtansicht eines Abgasturboladers mit einem Verdichter, umfassend, schematisch angedeutet, zwei unterschiedliche Luftansauggehäuse, einen Filterschalldämpfer und einen Luftansaugstutzen,
- Fig. 2: einen entlang der Achse geführten Schnitt durch einen Verdichter mit einer Reinigungsvorrichtung gemäss dem Stand der Technik,
- Fig. 3: eine isometrische Ansicht eines Schalldämpfers mit einem erfindungsgemäss integrierten Behälter für ein Reinigungsmedium,
- Fig. 4: eine isometrische Ansicht des in radialer Richtung durch den Behälter für ein Reinigungsmedium aufgeschnittenen Schalldämpfers nach Fig. 3, und
- Fig. 5: eine isometrische Ansicht des durch den Behälter für ein Reinigungsmedium aufgeschnittenen Schalldämpfers nach Fig. 3.

### Weg zur Ausführung der Erfindung

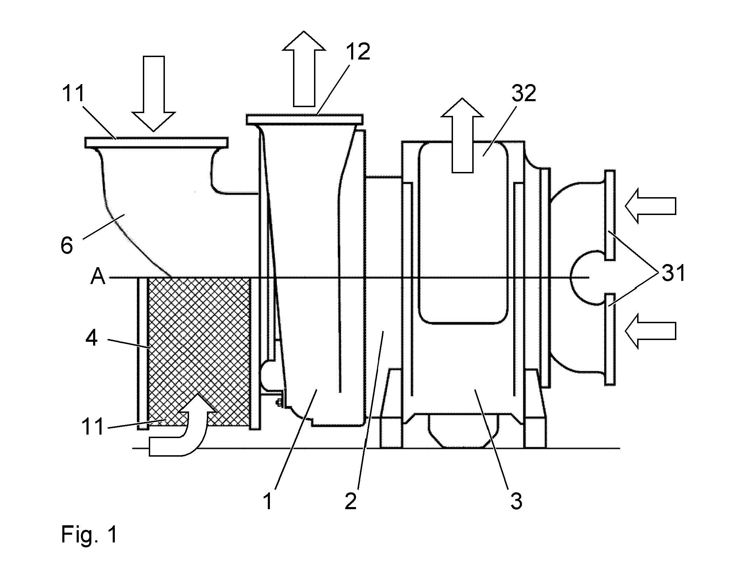

Fig. 1 zeigt einen herkömmlichen Abgasturbolader mit Verdichter 1 und Abgasturbine 3, sowie dazwischen angeordnetem Lagergehäuse 2. Die Abgasturbine 3 umfasst ein Gaseintritt 31, durch welchen das heisse Abgas auf das Turbinenrad strömt und dieses antreibt, bevor das Abgas durch den Gasaustritt 32 der Auspuffanlage zugeführt wird. Das Turbinenrad ist an einem Ende einer um die Achse A rotierbaren Welle angeordnet, welche im Lagergehäuse 2 drehbar gelagert ist. Am anderen Ende der Welle befindet sich das Verdichterrad, welches durch den Lufteintritt 11 angesaugte Luft verdichtet, welche anschliessend in einem Spiral- oder Kollektorgehäuse gesammelt und über den Luftaustritt 12 den Brennkammern des Verbrennungsmotors zugeführt wird. Die angesaugte Luft kann dem Verdichter über einen rohrförmigen Ansaugstutzen 6 oder über einen Schalldämpfer 4 zugeführt werden. Der Schalldämpfer kann zusätzlich Filterelemente umfassen, welche das Eintreten von grösseren Partikeln in den Verdichter verhindern. In diesem Fall wird von einem Filterschalldämpfer gesprochen.

Wie bereits eingangs erwähnt zeigt Fig. 2 eine Verdichteranordnung mit einer herkömmlichen Reinigungsvorrichtung. Zum Einführen der Reinigungsflüssigkeit in den Strömungskanal sind von radial ausserhalb des Verdichtergehäuses oder in einer alternativen Ausführungsform wie sie von gewissen Verdichterherstellern verwendet wird im radial inneren Bereich des Strömungskanals Zuführungen 52 in Form von einfachen Schläuchen oder dünnen Rohren in den Strömungsbereicht geführt. Durch diese Zuführungen kann zum Reinigen des Verdichterrades 10 zum geeigneten Zeitpunkt die benötigte Menge eines geeigneten Reinigungsmediums aus einem Behälter 51 in den Strömungskanal eingeführt werden. Das Reinigungsmedium wird im Betrieb von der Luftströmung erfasst und in den Bereich der Laufschaufeln des rotierenden Verdichterrades 10 befördert, wo es eine Reinigung der verschmutzten Oberflächen bewirken soll.

Erfindungsgemäss wird der Behälter für das Reinigungsmedium nicht separat am Verdichtergehäuse oder an einem angebauten Gehäuseteil befestigt, sondern in eines der Gehäuseteile integriert.

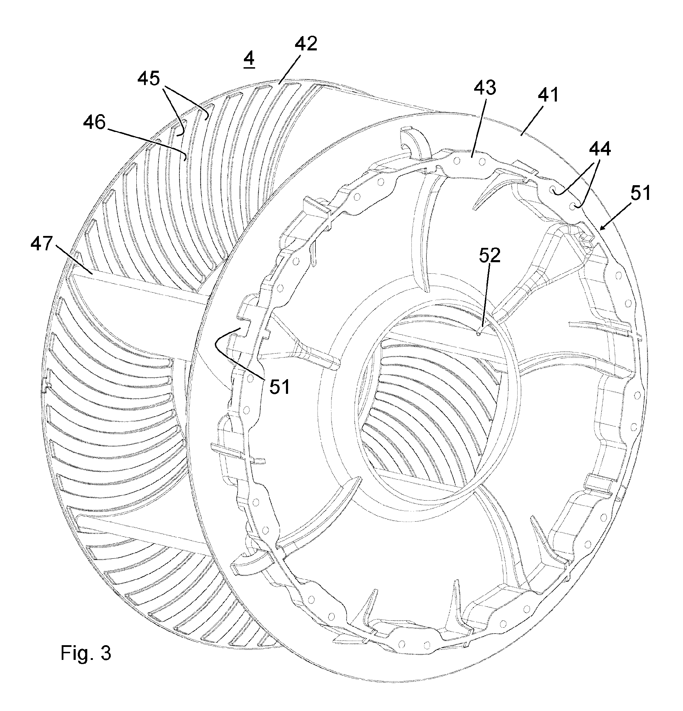

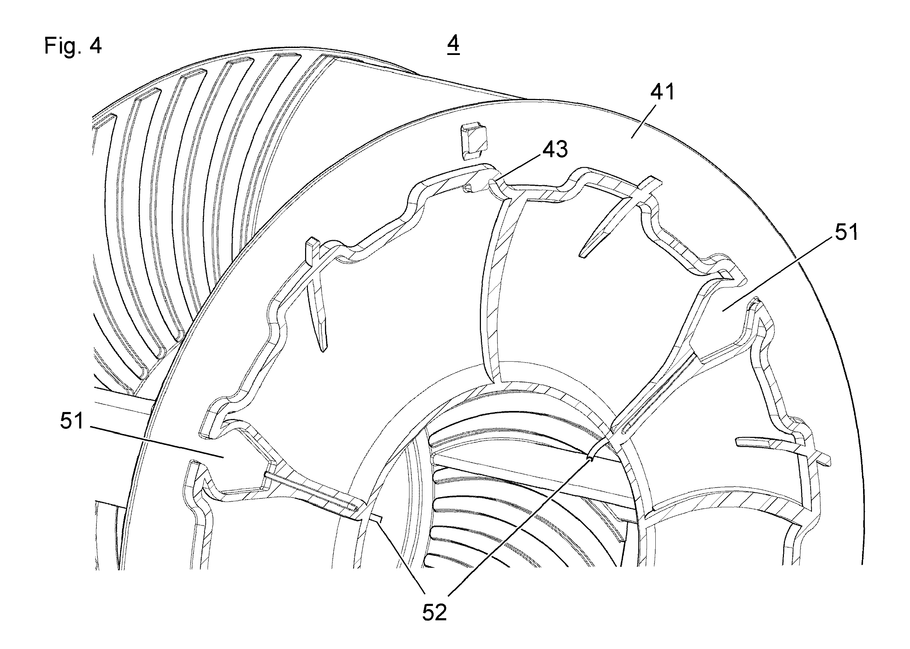

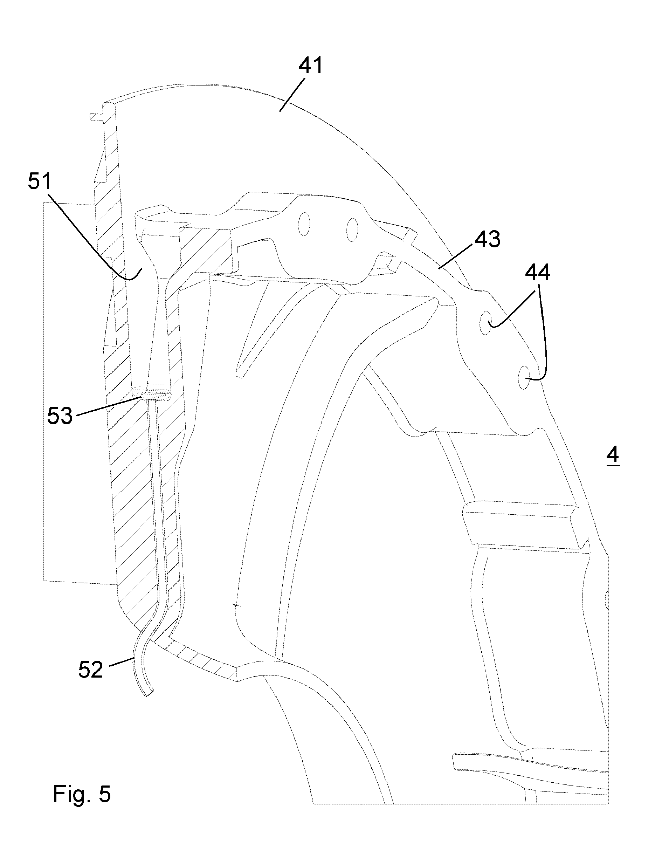

In der in den Fig. 3 bis 5 dargestellten Ausführungsform ist der Behälter 51 erfindungsgemäss in der dem Verdichter zugewandten Vorderwand 41 des Schalldämpfers 4 integriert. Die Vorderwand 41 weist in der Mitte eine Öffnung auf, durch welche die Luft auf das Verdichterrad strömt. Die Öffnung kann kreisrund oder kreisringförmig ausgebildet sein. Der Schalldämpfer umfasst neben der Vorderwand 41 eine Rückwand 42. Die Vorderwand und die Rückwand sind über Rippen 47 miteinander verbunden, wobei das gesamte Schalldämpfergehäuse als ein Gussteil ausgebildet oder aus separaten, zusammengefügten Elementen zusammengesetzt sein kann. In der dargestellten Ausführungsform umfasst der Schalldämpfer weiter aus den Gehäusewänden vorstehende Vorsprünge 45, zwischen denen sich Nuten 46 bilden, welche der Aufnahme von Dämmelementen dienen. Die angesaugte Luft strömt folglich in radialer Richtung in den Bereich zwischen der Vorderwand und der Rückwand, zwischen den Dämmelementen hindurch und durch die Öffnung in der Vorderwand hin zum Verdichter. Zur Befestigung des Schalldämpfers 4 am Verdichtergehäuse sind entlang dem Umfang verteilt in einem Befestigungsflansch 43 Bohrungen 44 eingelassen. In der dargestellten Ausführungsform ist der Behälter 51 als Teil des Befestigungsflansches ausgebildet, wie im Detail dem Schnitt parallel zur Vorderwand durch den Befestigungsflansch 43 und den Behälter 51 gemäss Fig. 4 oder dem Schnitt senkrecht zur Vorderwand durch den Behälter 51 gemäss Fig. 5 entnommen werden kann. Im Bereich der Öffnung in der Vorderwand 41 des Schalldämpfers mündet der Behälter 51 in einer rohrförmigen Zuführung 52 in den Strömungskanal. Durch diese Zuführung wird das Reinigungsmedium aus dem Behälter 51 in die Strömung geleitet.

Optional kann zwischen dem Behälter 51 und der Zuführung 52 ein Ventil angeordnet sein, mit welchem die Leitung zwischen dem Behälter und der Zuführung bei Bedarf geschlossen werden kann, etwa um zu verhindern, dass im Betrieb des Verdichters über die Zuführung und den Behälter ungefilterte Luft angesaugt wird und den Verdichter verschmutzt oder allenfalls unerwünschte Geräusche verursacht.

In der dargestellten Ausführungsform ist der Behälter 51 auf der dem Verdichter zugewandten Seite des Schalldämpfers angeordnet. Optional kann der Behälter jedoch auch in die Rückwand des Schalldämpfers eingelassen sein, wodurch etwa die Zugänglichkeit zum Befüllen des Behälters vereinfacht werden kann.

Der Behälter 51 wird vorteilhafterweise im oberen Bereich des Schalldämpfers angeordnet. Optional können zwei oder mehr Behälter 51 mit jeweils eigener oder einer gemeinsamen Zuführung 52 vorgesehen sein. Etwa bei grossen Verdichtern kann bei beidseitig angeordneten Behältern im Betrieb wahlweise der eine oder der andere Behälter für die Reinigung verwendet werden, etwa wenn die Zugänglichkeit auf einer Seite beschränkt sein sollte.

Der erfindungsgemäss in der Gehäusewand integrierte Behälter weist eine Einfüllöffnung auf, welche mit einem Stopfen, Deckel, Lappen oder einem anderen Verschluss nach radial aussen verschlossen sein kann, damit weniger Staub angesaugt und weniger Schall austritt.

Optional kann im Bereich der Einfüllöffnung und/ oder des Ausflusses des Behälters 51 ein Siebelement 53 angeordnet sein, welches den Durchfluss einer Reinigungsflüssigkeit erlaubt, jedoch grössere Schmutzpartikel aussiebt und am Eintritt in den Strömungskanal hindert. Ein solches Siebelement 53 verhindert damit auch ein Verstopfen der Zuführung 52.

Zum Reinigen des Verdichters wird die optional vorhandene Abdeckung des Behälters 51 entfernt. Danach wird das Reinigungsmedium durch die Einfüllöffnung in den Behälter geschüttet. Ist kein Ventil vorhanden, wird das Reinigungsmedium im Betriebszustand des Verdichters, also bei rotierendem Verdichterrad, aus dem Behälter gesaugt und dem Verdichter zugeleitet. Die Saugwirkung entsteht aufgrund des tieferen Drucks am Verdichtereintritt gegenüber dem Umgebungsdruck. Je nach Grösse des Verdichters und/ oder Verschmutzungsgrad kann der Reinigungsvorgang mehrmals wiederholt werden.

Wird die Luft für den Verdichter nicht über einen am Verdichter befestigten Schalldämpfer sondern über einen rohrförmigen Ansaugstutzen angesaugt, kann erfindungsgemäss der Behälter für das Reinigungsmedium im Ansaugstutzen integriert sein. Der Ansaugstutzen ist in der Regel ein gegossenes Werkstück, dessen Herstellungsprozess durch den zusätzlichen Behälter nur geringfügig angepasst werden muss.

Alternativ kann der Reinigungsbehälter auch in einer aussenliegenden, d.h. dem Schalldämpfer oder dem Ansaugstutzen zugewandten Gehäusewand des Verdichtergehäuses angeordnet sein. Dieses Gehäuseteil ist in der Regel ebenso wie die Vorderwand des Schalldämpfers oder der Ansaugstutzen ein gegossenes Element, welches auf einfache Art angepasst werden kann.

Die erfindungsgemässe Integration des Behälters in eines der den Strömungskanal begrenzenden Gehäuseteile im Bereich des Lufteintritts des Verdichters führt dazu, dass keine zusätzlichen Anbauteile für die Reinigung des Verdichters vorgesehen werden müssen.

Als Reinigungsmedium kann eine Reinigungsflüssigkeit eingesetzt werden. Beispielsweise Wasser, mit oder ohne spezielle Aufbereitung wie Reinigung oder Temperierung. Das Wasser kann mit oder ohne Reinigungszusätze verwendet werden. Alternativ oder mit der Flüssigkeit vermischt kann als Reinigungsmedium ein Granulat verwendet werden.

Die erfindungsgemässe Verdichterreinigung eignet zum Reinigen von Radialverdichtern von Abgasturboladern für Brennkraftmaschinen oder anderen Verdichtern.

### Bezugszeichenliste

- 1: Verdichter
- 10: Verdichterrad
- 11: Lufteintritt
- 12: Luftaustritt
- 2: Lagergehäuse
- 3: Abgasturbine
- 31: Gaseintritt
- 32: Gasaustritt
- 4: Schalldämpfer
- 41: Vorderwand
- 42: Rückwand
- 43: Befestigungsflansch
- 44: Bohrungen
- 45: Vorsprünge
- 46: Nuten
- 47: Rippen
- 51: Behälter für Reinigungsmittel
- 52: Zuführung
- 53: Siebelement
- 6: Luftansaugstutzen

## Patentansprüche

1. Lufteintrittsgehäuse eines Verdichters, umfassend eine einen zum Verdichterrad führenden Strömungskanal begrenzende Gehäusewand (41), **dadurch gekennzeichnet, dass** ein Behälter (51) zur Aufnahme eines Reinigungsmediums in die Gehäusewand (41) eingelassen ist und dass eine in einer Zuführung (52) endenden Leitung den Behälter (51) mit dem Strömungskanal verbindet, so dass einer Strömung im Strömungskanal aus dem Behälter (51) über die Leitung und die Zuführung (52) ein Reinigungsmedium zugeführt werden kann.

2. Lufteintrittsgehäuse nach Anspruch 1, wobei zwischen dem Behälter (51) und der Zuführung (52) ein Ventil vorgesehen ist, mit welchem die Leitung geöffnet und geschlossen werden kann.

3. Lufteintrittsgehäuse nach einem der Ansprüche 1 oder 2, wobei der Behälter (51) eine Einfüllöffnung aufweist, welche verschliessbar ausgebildet ist.

4. Lufteintrittsgehäuse nach einem der Ansprüche 1 bis 3, wobei im Behälter (51) ein Siebelement (53) angeordnet ist.

5. Lufteintrittsgehäuse nach einem der Ansprüche 1 bis 4, wobei mehrere Behälter (51) in die Gehäusewand (41) eingelassen sind.

6. Schalldämpfer, umfassend ein Gehäuse nach einem der Ansprüche 1 bis 5.

7. Ansaugstutzen für einen Verdichter, umfassend ein Gehäuse nach einem der Ansprüche 1 bis 5.

8. Verdichter, umfassend ein Gehäuse nach einem der Ansprüche 1 bis 5.

9. Verdichter, umfassend einen Schalldämpfer nach Anspruch 6 oder einen Ansaugstutzen nach Anspruch 7.

10. Abgasturbolader, **gekennzeichnet durch** einen Verdichter nach einem der Ansprüche 8 oder 9.
